# EUROPEAN PATENT SPECIFICATION

(11) **EP 4 231 886 B1**
(45) Date of publication and mention of the grant of the patent: **15.07.2026**
(21) Application number: 21882330.0
(22) Date of filing: 21.10.2021
(51) Int. Cl.: A47L 1/12, B08B 1/00, B60S 1/30

(54) **WINDOW CLEANING DEVICE**
FENSTERREINIGUNGSVORRICHTUNG
DISPOSITIF DE NETTOYAGE DE FENÊTRES

(30) Priority: 25.10.2020 IL 27826520
(43) Date of publication of application: 30.08.2023
(73) Proprietor: Tyroler Ltd., 4492000 Neve Yamin (IL)
(72) Inventor: TYROLER, Dan, 1210500 Yesod HaMa'ala (IL)
(74) Representative: Vossius & Partner Patentanwälte Rechtsanwälte mbB
(86) International application number: PCT/IL2021/051249
(87) International publication number: WO 2022/085004

(56) References cited:
- CN-A- 103 479 286
- CN-Y- 2 263 961
- KR-A- 20060 008 649
- US-A- 5 515 570
- US-A1- 2015 027 493
- ANONYMOUS: "Adjustable Series: The Glider D4 AFC | Fit To 2-40 mm / 0.1”-1.6” Window Thick", 13 May 2020 (2020-05-13), pages 1 - 12, XP009536305, Retrieved from the Internet <URL:https://tyrolerltd.com/magnetic-window-cleaner/the-glider-d-4> [retrieved on 20210207]
- TYROLER BRIGHT TOOLS: "The Glider D-4 Magnetic Window Cleaner Indoor & Outdoor Glass Pane Cleaning | Tyroler Bright Tools", YOUTUBE, 10 May 2020 (2020-05-10), XP055922805, Retrieved from the Internet <URL:https://www.youtube.com/watch?v=u1ZkiPhz86I>

## Description

### TECHNOLOGICAL FIELD

The present invention is in the field of cleaning tools, in particular tools for cleaning windows.

### BACKGROUND ART

References considered to be relevant as background to the presently disclosed subject matter are listed below:
- https://www.voutube.com/watch?v=SMI AiEa0Jg&feature=emb title&ab c hannel=TyrolerBrightTools;
- https://www.businessinsider.com/glider-magnetic-window-cleaner-life-hack-2018-2;
- CN 103479286 that discloses a magnet attraction type glass cleaner comprises a first cleaner and a second cleaner. The first cleaner and the second cleaner comprise casings, magnetic blocks, cleaning blocks and scraping strips. The first cleaner and the second cleaner can be mutually attracted to the front and the back of cleaned glass through magnetic force effect of the magnetic blocks and can move synchronously. The magnet attraction type glass cleaner is characterized in that assembling grooves comprise upper assembling grooves and lower assembling grooves, the upper assembling grooves and the lower assembling grooves of the casings are respectively located on the upper sides and the lower sides of assembling cavities, the scraping strips comprises upper scraping strips and lower scraping strips, the upper scraping strips are respectively correspondingly arranged in the upper assembling grooves, the lower scraping strips are respectively correspondingly arranged in the lower assembling grooves, and the upper scraping strip and the lower scraping strip in the identical cleaner and the exposed surface of the cleaning block are approximately positioned on the same plane and can be in simultaneous contact with the surface of the cleaned glass..

### BACKGROUND

Cleaning windows from both sides may be challenging, in particular when the external surface of the window is not easily accessible. To ease the cleaning process a two-members device is typically used, having an internal member and an external member sandwiching the window and maintaining the grip of the window by magnetic attraction forces applied between the members. These devices are substantially made of rigid plastic that may potentially damage the window during the cleaning process. Furthermore, unintentional coupling of the two members may easily result in an injury of the user if a body part is getting trapped between the plastic members.

### GENERAL DESCRIPTION

The present invention discloses a window cleaning device for cleaning a window. The device is constituted by two cleaning units, each is configured to be attached to a different side of the window due to attraction force of the other cleaning unit. from the other side of the window. The attraction force is applied by magnetic members that are embedded in each of the cleaning units and each of them is configured to be magnetically coupled with at least one magnetic member of the other unit. Once the cleaning units are attached to the window, the window is engaged either by integral wipers of the cleaning unit and/or cleaning cloths attachable to the cleaning units to perform the cleaning process by the device. The cleaning process is performed by movement of one of the cleaning units that is accessible by a user, i.e. the cleaning unit that is at the internal side of the window. A movement of one cleaning unit results in a respective movement of the other unit, i.e. the two cleaning units perform a conjugated movement over the window during the cleaning process. The cleaning units are each a single-piece molded article made of rubber, silicone rubber, elastomeric material, or a thermosetting material, namely a relatively soft material, softer than the plastic material forming the known window cleaning devices. This results in a window cleaning device having a less destructive potential for the window compared to plastic-based device that can cause scratches and other damages to the window during the cleaning process or can damage the window during the attachment of the device to two sides of the window. A plastic-based window cleaning device can easily cause damage to a window during the attachment of the two units of the device to the window due to the strong magnetic attraction between the units and the relative rigidity of the plastic. Furthermore, since the material that the cleaning units are made of is relatively soft (compared to common plastic-based devices), the risk of being injured due to unintentional magnetic coupling of the two units is dramatically reduced. Moreover, the softness of the material of the units of the cleaning devices, eliminates the risk of their breakage while accidently falling from the window during a cleaning process, unlike plastic devices which tend to break when they fall.

Thus, an aspect of the present invention provides a device for cleaning a window with inner and outer surfaces. The device includes a first cleaning unit for cleaning the inner surface and a second cleaning unit for cleaning the outer surface of the window. Each of the cleaning units includes (i) a base member, which is generally elongated and planar, extending between first and second ends and including a first, window-facing face that faces the window during cleaning process and a second, opposite face, facing away from the window; (ii) at least two members of a magnetic couple, magnetically engageable with respective couple members in the other unit. Each of the members of the magnetic couple are either integrated within the base member or housed within a magnet-receiving element of the base member; (iii) a cleaning arrangement selected from at least one of: (1) two cloth fastening arrangements for allowing fastening two portions of a cleaning cloth such that the cloth extends over the first face, and/or (2) integral wipers extending, at least partially, along the long edge of the cleaning units between the first and second ends.

The first and second cleaning units is a single-piece molded article made of rubber, silicone rubber, elastomeric material, or a thermosetting material, preferably rubber or silicon rubber. It is to be noted that the magnet members are not part of the single-piece molded article and are only housed within the cleaning units or being surrounded by the molded material.

In some embodiment of the device, the first and second cleaning units are single-piece molded articles made of rubber.

In some embodiment of the device, the first and second cleaning units are single-piece molded articles made of silicon rubber.

In some embodiments of the device, the first and second cleaning units are single-piece molded articles made of an elastomeric material.

In some embodiments of the device, each of the cleaning units includes two magnet-receiving elements for housing the members of the magnetic couple, each magnet-receiving element houses one magnetic member.

In some embodiments of the device, the magnet-receiving elements are having a bore with dimensions adapted to accommodate the member of the magnetic couple.

In some embodiments of the device, the bore is defined between a bottom end and a top end of the magnet-receiving element.

In some embodiments of the device, the bottom end is constituted by a part of the base member. In some embodiments, the bottom end constitutes a part of the second face.

In some embodiments of the device, each of the bores is sealed by a respective closure element being fixedly attached to the top end of the respective bore, thereby trapping the member of the magnetic couple within the bore. The magnets that are housed within the bore can be glued, attached, merely placed at the bottom part of the bore, or can be adjustably displaced along the bore by a magnet-adjustment assembly.

In some embodiments of the device, the closure includes a metal plate covered or coated with rubber, silicone rubber, elastomeric material, or a thermosetting material.

In some embodiments of the device, the first cleaning unit is fitted with a magnet-adjustment assembly for allowing adjustment of the position of the magnet along said bore. The magnet-adjustment assembly is typically not being a part of the single-piece molded article and is being attached to the first cleaning unit.

In some embodiments of the device, the magnet-adjustment assembly includes the closure element, namely the closure element is being part of the magnet-adjustment assembly.

In some embodiments of the device, the magnet-adjustment assembly includes adjustment actuator, e.g. a knob, for allowing said adjustment. At least portion of the adjustment actuator is coated or covered with rubber, silicone rubber, elastomeric material, or a thermosetting material.

The parts of the magnet-adjustment assembly and the closure elements that are exposed to the user are coated with a soft material, typically the same material forming the cleaning units. By that, any exposed part of the device is covered by a relatively soft material to provide the advantages of the window cleaning device, as described above. In some embodiments of the device, each of the base members is generally planar. In some embodiments of the device, each of the base members is rectangular.

In some embodiments of the device, each of the base members includes one or more integral wipers, being a part of the single-molded article and extending at least partially between the first and second ends and are configured for engaging the window. Specifically, the wiper includes a window-engaging edge that is intended to contact the window. The wipers are designed to protrude from the window-facing face of the base member such that only the wipers, and not any other part of the cleaning unit, contact the window upon cleaning.

In some embodiments of the device, the window-facing face defining a plane and the wipers cross said plane, namely the wipers extend from one side of the plane to the other side of the plane.

In some embodiments of the device, the wipers constitute edges of the base members, e.g. extend along at least part of a long edge of the base member. Namely, the wipers are forming the side edges of the cleaning units.

For the wipers to operate efficiently, they need to have a rigid base that provides a counter force when they are urged against the surface to be cleaned, e.g. a window. Thus, the base of the wipers is either formed of a thick molded material and/or includes a reinforcing rigid element.

In some embodiments of the device, the molded material thickness of the base of the wiper is greater than the thickness of the base member part between the wipers.

In some embodiments of the device, each of the cleaning units includes an elongated rigid element embedded in the base member along each of the integral wipers and at least partially extending parallel to the wiper between the first and second ends for supporting the wiper and granting it the required rigidity. The cleaning unit is molded around said rigid element.

In some embodiments of the device, the fastening arrangements are defined by slits at the base members. Namely, the fastening arrangements are formed by the shape of the molded article, or by apertures formed thereon.

In some embodiments of the device, each of the cleaning units includes reinforcing ribs formed at the window-facing face for increasing rigidity of the base member.

In some embodiments of the device, a security rope or thread is tied at one end to a portion of the second unit and intended to be tied to a static object at its other end to secure the second, external cleaning unit when it accidently falls from the window during a cleaning process. In the same manner, a second rope or thread can be tied to a portion of the first cleaning unit.

Yet another aspect of the present invention provides a device for cleaning a window with inner and outer surfaces. The device includes a first cleaning unit for cleaning the inner surface and a second cleaning unit for cleaning the outer surface of the window. Each of the cleaning units includes: (i) a base member being generally elongated and planar and extending between first and second ends and comprising a first, window-facing face that faces the window during cleaning and a second, opposite face; (ii) a magnet-receiving element, typically having a tubular shape, protruding from the base member and configured to house at least two members of a magnetic couple, magnetically engageable with respective couple members in the other unit; (iii) two cloth fastening arrangements for allowing fastening two parts of a cleaning cloth such that the cloth extends over the first face.

Each of the first and second cleaning units is a single-piece molded article made of rubber, silicone rubber, elastomeric material, or a thermosetting material. It is to be noted that the magnet members are not part of the single-piece molded article.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Figs. 1A-1B** are schematic illustrations of perspective views of a non-limiting example of the first cleaning unit out of two forming the window cleaning device according to the present invention.
**Figs. 2A-2B** are schematic illustrations of perspective views of a non-limiting example of the second cleaning unit out of two forming the window cleaning device according to the present invention.
**Fig. 3** is an illustration of a magnet adjustment assembly accommodated in a bore of a magnet receiving element that is included in the first cleaning unit of the window cleaning device of the present invention. The molded material forming the magnet receiving element is shown as semi-transparent.
**Fig. 4** is a schematic illustration of a longitudinal cross section of a non-limiting example of the base members of the cleaning units of the device of the present invention.
**Figs. 5A-5B** are illustrations of a non-limiting example showing the two cleaning units forming the window cleaning device, facing one another with a window partitioning between them. These figures illustrate the device during a cleaning process. **Fig. 5A** is a side view and **Fig. 5B** is a perspective view. The molded material forming the cleaning units is shown as semi-transparent.

### DETAILED DESCRIPTION OF EMBODIMENTS

The following figures are provided to exemplify embodiments and realization of the invention of the present invention.

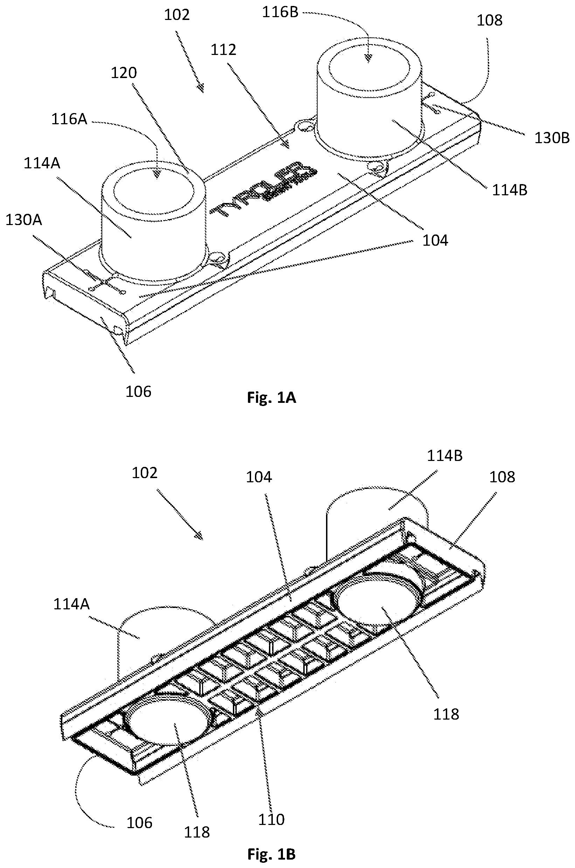

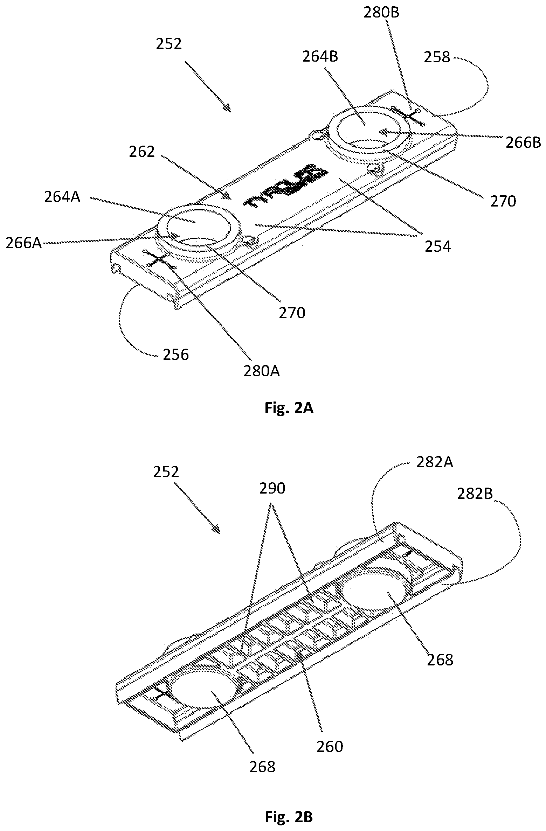

Reference is first being made to **Figs. 1A-1B** and **2A-2B,** which are schematic illustrations of perspective views of the first and second cleaning units of the device for cleaning a window of the present invention. The first and second cleaning units defining together the cleaning device and are configured to be magnetically coupled to one another from two sides of a window, and each is configured to clean one side of the window. **Figs. 1A-1B** show the top and bottom views of the first cleaning unit, respectively; **Figs. 2A-2B** show the top and bottom views of the second cleaning unit, respectively. Each of the cleaning units is a single-piece molded article made of rubber, silicone rubber, elastomeric material, or a thermosetting material. The first cleaning unit **102** includes a base member **104** that extends between a first end **106** and a second end **108,** the second cleaning unit **252** includes a base member **254** that extends between a first end **256** and a second end **258.** It is to be noted that numerical references of **1XX** refer to the first cleaning unit and the numerical references of **2XX** refer to the second cleaning unit. The base members **102, 252** include a first, window-facing face **110, 260** and a second face **112, 262** opposite to the first face and facing away from the window. Two magnet-receiving elements **114A, 264A** and **114B, 264B** are formed on the second face **112, 262** on generally opposite sides of the base members **104, 254** namely one **114A, 264A** is adjacent to the first end **106, 256** and the other **114B, 264A** is adjacent to the second end **108, 258.** Each of the magnet-receiving elements **114A, 264A** and **114B, 264B** is tubular defining a bore **116A, 266A** and **116B, 266B** extending between a bottom end **118, 268** of the respective magnet-receiving element and a top end **120, 270** thereof and dimensioned to accommodate a member of a magnetic couple.

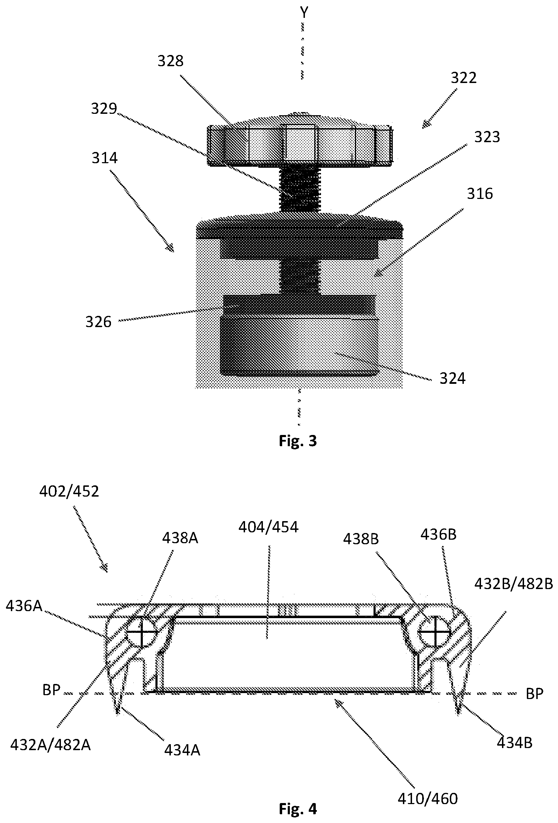

In the figures throughout the application, like elements of different figures were given similar reference numerals shifted by the number of hundreds corresponding to the number of the respective figure. For example, element **316 in** **Fig.** 3 serves the same function as element **116 in** **Figs. 1A-1B****.**

Reference is now being made to **Fig. 3****,** which is an illustration showing an example of the magnet-receiving element **314** of the first cleaning unit, which its walls are presented as semi-transparent, showing a magnet-adjustment assembly **322** that is received in the bore **316** and configured to adjust the position of the magnet **324** along an axis **Y** normal to the first and second faces. The bore **316** is sealed by a closure element **323,** confining the magnet **324** within the bore **316.** The magnet-adjustment assembly **322** comprises a disc **326** that is confined within the bore **316** and is displaceable along axis **Y** by using a knob **328** disposed externally to the bore and is integral with the disc **326** via a column **329** passing through the closure element **323.** The column is screwable through the closure element **323** to allow the displacement of the disc **326.** The magnet **324** is attached to the disc **326** that is formed at the bottom of the magnet-adjustment assembly **322** and is displaceable therewith, thereby allowing displacement of the magnet along axis **Y** to the desired position, e.g. at the bottom of the bore to obtain strong magnetic attraction with the respective magnetic member or at the top of the bore to obtain weak magnetic attraction. The attachment can be magnetically or by gluing the magnet to the disc. It is to be noted, that the magnet-receiving elements of the second cleaning unit are merely designed to accommodate the magnetic member and typically does not include an adjustment assembly. A closure element, e.g. a lid, fits over the top end of the bore to seal the magnetic member within the bore. The knob **328** and the closure element **323** are covered by a soft material, for example a silicon or a silicon rubber that forms the cleaning unit the magnet adjustment assembly is coupled to.

Referring back to **Figs. 1A-1B** and **Figs. 2A-2B****,** the base member **106, 256** is formed with two slits **130A, 280A** and **130B, 280B,** each is disposed between a respective magnet-receiving element **114A, 264A** and **114B, 254B** and the first end **106, 256** or the second end **108, 258,** respectively. Namely, slit **130A, 280A** is disposed between magnet-receiving element **114A, 264A** and the first end **106, 256** and slit **130B, 280B** is disposed between magnet-receiving element **114B, 264B** and the second end **108, 258.** The slits **130A, 280A** and **130B, 280B** are each configured for receiving and retaining a portion of a cleaning cloth (not shown) such that it extends over the bottom face **110, 260** of the cleaning unit **102, 252.**

The cleaning unit **102, 252** includes two integral wipers **132A, 282A** and **132B, 282B** that are being part of the base member **104, 254** and constitute its edges. The wipers **132A, 282A** and **132B, 282B** extend, each on opposite side to the other, between the first end **106, 256** and the second end **108, 258.** Reference is now being made to **Fig. 4****,** which exemplifies a longitudinal cross section of the base member of the first and the second cleaning units. It is to be noted that the following description of **Fig. 4** applies to both the first and the second cleaning units. As can be appreciated, the wipers **432A/482A** and **432B/482B** constitute the side edges of the cleaning unit. The wipers have a window-engaging portion **434A** and **434B** and a base portion **436A** and **436B.** Each of the wipers comprises a rigid element **438A** and **438B** that is formed at its base portion **436A** and **436B,** respectively. The rigid elements extend, at least partly, between the first end and the second end of the cleaning unit **402/452,** together with the wipers. The rigid elements grant the wipers their rigidity, such that when they engage the window, they do not fold or squeeze. As can be appreciated in **Fig. 4****,** the bottom face **410/460** of the base member **404/454** defines a bottom plane **BP,** the wipers **432A/482A** and **432B/482B** are crossing the bottom plane **BP.** Namely, the window engaging portion of each of the wipers is at one side of the plane and the base member of each of the wipers is at the other side of the bottom plane **BP.** This allows that the wipers **432A/482A** and **432B/482B** are the only elements that engage the window during the cleaning process.

Referring back to **Figs. 1A-1B** and **2A-2B,** the bottom face **110, 260** is formed with reinforcing ribs **140, 290.** The reinforcing ribs **140, 290** are typically formed between the bottom ends **118, 268** of the magnet-receiving elements **114A, 264A** and **114B, 254B.** The reinforcing ribs **140, 290** grants the base member additional rigidity that is required due to the forces that are being applied thereon during the cleaning process due to the strong magnetic attraction between the first and the second cleaning units.

It is to be noted, that in some embodiments, the cleaning device is formed of two identical cleaning units. The two cleaning units can be of the type of the first cleaning unit or preferably of the type of the second cleaning unit, namely two units without a magnet-adjustment assembly.

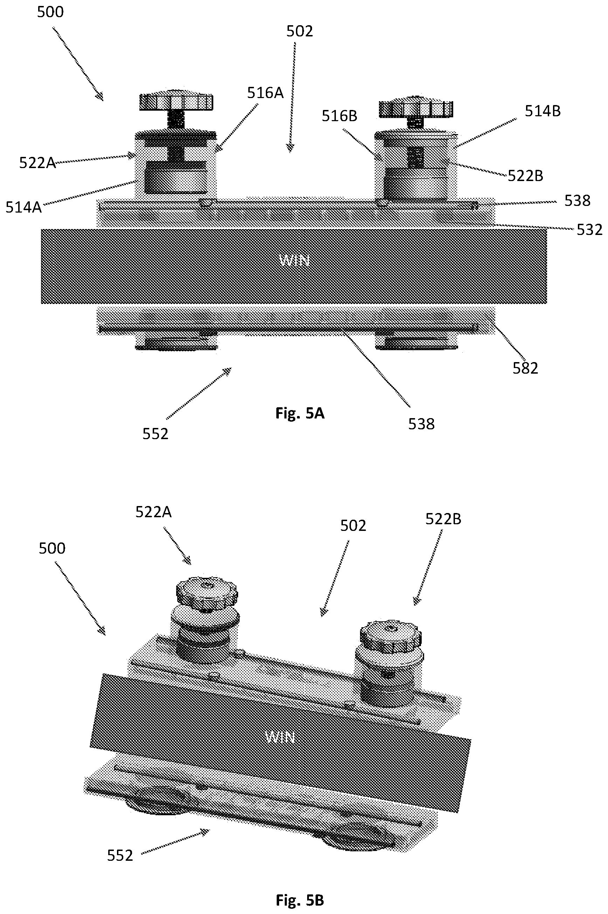

**Figs. 5A-5B** are illustrations of different views of a non-limiting example of the cleaning device **500** of the present disclosure. In these figures, the first and the second units **502** and **552** are shown facing one another, each from a different side of the window **WIN** they are cleaning. The cleaning units are formed of a single-piece molded article made of rubber, silicone rubber, elastomeric material, or a thermosetting material, the molded article material is presented in the figure as semi-transparent thereby showing internal parts (at least some of them are not typically visible to the naked eye). Particularly, the magnet-adjustment assemblies **522A** and **522B** of the first cleaning unit **502** are shown, disposed within the bores **516A** and **516B** of the magnet-receiving elements **514A** and **514B;** and the rigid elements **538** that extend together with the wipers **532, 582** of the first and second cleaning units **502** and **552.** As can be appreciated, the rigid elements **538** extend between the majority of the length between the first end **506, 558** and the second end **556, 558** of the cleaning units.

## Claims

1. A device for cleaning a window with inner and outer surfaces, comprising:
a first cleaning unit (102) for cleaning the inner surface and a second cleaning unit (252) for cleaning the outer surface of the window, each of which comprises
a base member (104, 254) extending between first (106, 256) and second (108, 258) ends and comprising a first, window-facing face (110, 260) and a second, opposite face (112, 262),
at least two members of a magnetic couple (324), magnetically engageable with respective couple members in the other unit, each of which being integrated within the base member (104, 254) or housed within a magnet-receiving element (114A, 264A, 114B, 264B) of the base member (104, 254);
wherein the device is **characterized by** that:
each of the first and the second cleaning units comprises one or more wipers (132A, 282A, 132B, 282B, 432A, 482A) integral with the base member (104, 254) and extending at least partially between said first (106, 256) and second (108, 258) ends and are configured for engaging the window; and
wherein each of the first and second cleaning units (102, 252) is a single-piece molded article made of rubber or silicone rubber.

2. The device of claim 1, wherein each of the cleaning units comprises two magnet-receiving elements (114A, 264A, 114B, 264B) for housing the members of the magnetic couple.

3. The device of claim 2, wherein said magnet-receiving elements are having a bore (116A, 266A, 116B, 266B) configured to accommodate the member (324) of the magnetic couple.

4. The device of claim 3, wherein said bore is defined between a bottom end (118, 268) and a top end (120, 270) of the magnet-receiving element.

5. The device of claim 4, wherein said bottom end is formed within the base member; and
wherein the bottom end constitutes a part of the second face.

6. The device of claim 4 or 5, wherein each of the bores is sealed by a respective closure element (323) being fixedly attached to the top end of the respective bore, thereby trapping the member of the magnetic couple within the bore.

7. The device of claim 6, wherein the closure element comprises a metal plate covered with rubber, silicone rubber, elastomeric material, or a thermosetting material.

8. The device of any one of claims 3-7, wherein the first cleaning unit is fitted with a magnet-adjustment assembly (322) for allowing adjustment of the position of the magnet along said bore; and
wherein the magnet-adjustment assembly comprises said closure element.

9. The device of claim 7 or 8, wherein the magnet-adjustment assembly comprises adjustment actuator (328) for allowing said adjustment, said adjustment actuator is at least partly coated with rubber, silicone rubber, elastomeric material, or a thermosetting material.

10. The device of any one of claims 1-9, wherein said window-facing face defining a plane (BP), said wipers cross said plane.

11. The device of claim 10, wherein said wipers constitute edges of the base members.

12. The device claim 10 or 11, wherein each cleaning unit comprises an elongated rigid element (438A, 438B) embedded in the base member along each of the integral wipers.

13. The device of any one of claims 1-12, comprising two cloth fastening arrangements (130A, 280A) for allowing fastening two portions of a cleaning cloth such that the cloth extends over the first face, wherein said fastening arrangements are defined by slits (130A, 280A) at the base members.

14. The device of any one of claims 1-13, wherein each cleaning unit comprises reinforcing ribs (140, 290) formed at the window-facing face.

## Patentansprüche

1. Vorrichtung zum Reinigen eines Fensters mit Innen- und Außenflächen, aufweisend:
eine erste Reinigungseinheit (102) zum Reinigen der Innenfläche und eine zweite Reinigungseinheit (252) zum Reinigen der Außenfläche des Fensters, von denen jede aufweist:
ein Basiselement (104, 254), das sich zwischen einem ersten (106, 256) und einem zweiten (108, 258) Ende erstreckt und eine fensterzugewandte erste Fläche (110, 260) und eine gegenüberliegende zweite Fläche (112, 262) aufweist,
mindestens zwei Elemente eines Magnetpaares (324), die in magnetischem Eingriff mit jeweiligen Paarelementen der anderen Einheit gebracht werden können, von denen jedes in dem Basiselement (104, 254) integriert oder in einem Magnetaufnahmeelement (114A, 264A, 114B, 264B) des Basiselements (104, 254) untergebracht ist;
wobei die Vorrichtung **dadurch gekennzeichnet ist, dass**:
sowohl die erste wie auch die zweite Reinigungseinheit einen oder mehrere Wischer (132A, 282A, 132B, 282B, 432A, 482A) aufweist, die integral mit dem Basiselement (104, 254) sind und sich mindestens teilweise zwischen dem ersten (106, 256) und zweiten (108, 258) Ende erstrecken und zum Eingriff mit dem Fenster konfiguriert sind; und
wobei sowohl die erste wie auch die zweite Reinigungseinheit (102, 252) ein aus Kautschuk oder Silikonkautschuk hergestellter einstückiger geformter Gegenstand ist.

2. Vorrichtung nach Anspruch 1, wobei jede der Reinigungseinheiten zwei Magnetaufnahmeelemente (114A, 264A, 114B, 264B) zum Unterbringen der Elemente des Magnetpaares aufweist.

3. Vorrichtung nach Anspruch 2, wobei die Magnetaufnahmeelemente eine Bohrung (116A, 266A, 116B, 266B) haben, die konfiguriert ist, das Element (324) des Magnetpaares unterzubringen.

4. Vorrichtung nach Anspruch 3, wobei die Bohrung zwischen einem unteren Ende (118, 268) und einem oberen Ende (120, 270) des Magnetaufnahmeelements definiert ist.

5. Vorrichtung nach Anspruch 4, wobei das untere Ende in dem Basiselement gebildet ist; und
wobei das untere Ende Teil der zweiten Fläche bildet.

6. Vorrichtung nach Anspruch 4 oder 5, wobei jede der Bohrungen mittels eines jeweiligen Verschlusselements (323) verschlossen ist, das an dem oberen Ende der jeweiligen Bohrung fest angebracht ist, um dadurch das Element des Magnetpaares in der Bohrung zu sichern.

7. Vorrichtung nach Anspruch 6, wobei das Verschlusselement eine Metallplatte aufweist, die mit Kautschuk, Silikonkautschuk, Elastomermaterial oder einem duroplastischen Material beschichtet ist.

8. Vorrichtung nach einem der Ansprüche 3 bis 7, wobei die erste Reinigungseinheit mit einer Magnetanpassungsanordnung (322) ausgestattet ist, um eine Anpassung der Position des Magnets (Elements des Magnetpaares) entlang der Bohrung zu erlauben; und
wobei die Magnetanpassungsanordnung das Verschlusselement aufweist.

9. Vorrichtung nach Anspruch 7 oder 8, wobei die Magnetanpassungsanordnung einen Anpassungsaktuator (328) aufweist, um die Anpassung zu erlauben, wobei der Anpassungsaktuator mindestens teilweise mit Kautschuk, Silikonkautschuk, Elastomermaterial oder einem duroplastischen Material beschichtet ist.

10. Vorrichtung nach einem der Ansprüche 1 bis 9, wobei die fensterzugewandte Fläche eine Ebene (BP) definiert, und die Wischer die Ebene kreuzen.

11. Vorrichtung nach Anspruch 10, wobei die Wischer Kanten des Basiselements bilden.

12. Vorrichtung nach Anspruch 10 oder 11, wobei jede Reinigungseinheit ein längliches steifes Element (438A, 438B) aufweist, das in dem Basiselement entlang jedes der integralen Wischer eingebettet ist.

13. Vorrichtung nach einem der Ansprüche 1 bis 12, aufweisend zwei Tuchanbringungseinrichtungen (130A, 280A), zum Befestigen von zwei Teilen eines Reinigungstuchs zu erlauben, derart, dass das Tuch sich über die erste Fläche erstreckt, wobei die Anbringungseinrichtungen durch Schlitze (130A, 280A) an den Basiselementen definiert sind.

14. Vorrichtung nach einem der Ansprüche 1 bis 13, wobei jede Reinigungseinheit Verstärkungsrippen (140, 290) aufweist, die an der fensterzugewandten Fläche gebildet sind.

## Revendications

1. Dispositif pour nettoyer une vitre comportant des surfaces intérieure et extérieure, comprenant :
une première unité de nettoyage (102) pour nettoyer la surface intérieure et une deuxième unité de nettoyage (252) pour nettoyer la surface extérieure de la vitre, chacune d'entre elles comprenant
une pièce de base (104, 254) s'étendant entre des première (106, 256) et deuxième (108, 258) extrémités et comprenant une première face tournée vers la vitre (110, 260) et une deuxième face opposée (112, 262),
au moins deux pièces d'un couple magnétique (324), pouvant se mettre en prise magnétiquement avec des pièces de couple respectives de l'autre unité, chacune d'entre elles étant intégrée dans la pièce de base (104, 254) ou logée dans un élément de réception d'aimant (114A, 264A, 114B, 264B) de la pièce de base (104, 254) ;
dans lequel le dispositif est **caractérisé en ce que** :
chacune des première et deuxième unités de nettoyage comprend une ou plusieurs raclettes (132A, 282A, 132B, 282B, 432A, 482A) formées d'un seul tenant avec la pièce de base (104, 254) et s'étendant au moins partiellement entre lesdites première (106, 256) et deuxième (108, 258) extrémités, et est configurée pour venir en prise avec la vitre ; et
dans lequel chacune des première et deuxième unités de nettoyage (102, 252) est un article moulé en monobloc réalisé en caoutchouc ou en caoutchouc de silicone.

2. Dispositif selon la revendication 1, dans lequel chacune des unités de nettoyage comprend deux éléments de réception d'aimant (114A, 264A, 114B, 264B) pour loger les pièces du couple magnétique.

3. Dispositif selon la revendication 2, dans lequel lesdits éléments de réception d'aimant ont un alésage (116A, 266A, 116B, 266B) configuré pour accueillir la pièce (324) du couple magnétique.

4. Dispositif selon la revendication 3, dans lequel ledit alésage est défini entre une extrémité de dessous (118, 268) et une extrémité de dessus (120, 270) de l'élément de réception d'aimant.

5. Dispositif selon la revendication 4, dans lequel ladite extrémité de dessous est formée à l'intérieur de la pièce de base ; et
dans lequel l'extrémité de dessous fait partie de la deuxième face.

6. Dispositif selon la revendication 4 ou 5, dans lequel chacun des alésages est scellé par un élément de fermeture (323) respectif fermement fixé à l'extrémité de dessus de l'alésage respectif, retenant ainsi la pièce du couple magnétique à l'intérieur de l'alésage.

7. Dispositif selon la revendication 6, dans lequel l'élément de fermeture comprend une plaque métallique recouverte de caoutchouc, de caoutchouc de silicone, d'un matériau élastomère ou d'un matériau thermodurcissable.

8. Dispositif selon l'une des revendications 3 à 7, dans lequel la première unité de nettoyage est équipée d'un ensemble de réglage d'aimant (322) permettant de régler la position de l'aimant le long dudit alésage ; et
dans lequel l'ensemble de réglage d'aimant comprend ledit élément de fermeture.

9. Dispositif selon la revendication 7 ou 8, dans lequel l'ensemble de réglage d'aimant comprend un actionneur de réglage (328) permettant ledit réglage, ledit actionneur de réglage étant au moins partiellement revêtu de caoutchouc, de caoutchouc de silicone, d'un matériau élastomère ou d'un matériau thermodurcissable.

10. Dispositif selon l'une des revendications 1 à 9, dans lequel ladite face tournée vers la vitre définit un plan (BP), lesdites raclettes traversant ledit plan.

11. Dispositif selon la revendication 10, dans lequel lesdites raclettes constituent les bords des pièces de base.

12. Dispositif selon la revendication 10 ou 11, dans lequel chaque unité de nettoyage comprend un élément rigide allongé (438A, 438B) intégré dans la pièce de base le long de chacune des raclettes en un seul tenant.

13. Dispositif selon l'une des revendications 1 à 12, comprenant deux agencements de fixation (130A, 280A) de chiffon permettant de fixer deux parties d'un chiffon de nettoyage de sorte que le chiffon s'étende sur la première face, dans lequel lesdits agencements de fixation sont définis par des entailles (130A, 280A) au niveau des pièces de base.

14. Dispositif selon l'une des revendications 1 à 13, dans lequel chaque unité de nettoyage comprend des nervures de renfort (140, 290) formées sur la face tournée vers la vitre.
